# EUROPÄISCHE PATENTSCHRIFT

(11) **EP 3 007 927 B1**
(45) Veröffentlichungstag und Bekanntmachung des Hinweises auf die Patenterteilung: **25.01.2017**
(21) Anmeldenummer: 14725043.5
(22) Anmeldetag: 07.05.2014
(51) Int. Cl.: B60N 2/60, B60N 2/58, B60N 2/28

(54) **TELESKOPIERBARES BLENDENELEMENT EINER AUFNAHMEEINRICHTUNG EINES FAHRZEUGSITZES**
TELESCOPIC COVER ELEMENT OF A RECEIVING DEVICE OF A VEHICLE SEAT
ÉLÉMENT CACHE TÉLESCOPIQUE D'UN DISPOSITIF DE LOGEMENT D'UN SIÈGE DE VÉHICULE

(30) Priorität: 15.06.2013 DE 102013010153
(43) Veröffentlichungstag der Anmeldung: 20.04.2016
(73) Patentinhaber: Volkswagen Aktiengesellschaft, 38440 Wolfsburg (DE)
(72) Erfinder: SZLAG, Robert, 38440 Wolfsburg (DE)
(86) Internationale Anmeldenummer: PCT/EP2014/059360
(87) Internationale Veröffentlichungsnummer: WO 2014/198462

(56) Entgegenhaltungen:
- DE-A1-102009 036 726
- JP-A- 2001 354 058
- US-A1- 2008 111 411

## Beschreibung

Die Erfindung betrifft eine Aufnahmeeinrichtung, insbesondere an einem Fahrzeugsitz. Die Aufnahmeeinrichtung nimmt ein Aufnahmeelement eines Befestigungssystems auf, insbesondere eines Isofix-Befestigungssystems. Das Befestigungssystem umfasst ein Haltelement, insbesondere einen Isofix-Haltebügel. Das Aufnahmeelement ist an dem Halteelement festlegbar. Das Aufnahmeelement ist beispielsweise Teil eines zu befestigenden Ausstattungsteiles, insbesondere eines Kindersitzes. Nach dem Stand der Technik ist das Halteelement mit einem, eine Blendenöffnung aufweisenden Blendenelement versehen.

Das Isofix-Befestigungssystem ist ein bekanntes, besonders sicheres und einfach zu bedienendes Befestigungssystem, welches insbesondere zur Befestigung von Kindersitzen in einem Kraftfahrzeug verwendet wird. Bei diesem Befestigungssystem wird in einer Gebrauchsstellung zwischen einem strukturfesten Haltebügel (Halteelement) und einem zu befestigenden Gegenstand (Kindersitz) eine starre Verbindung zwischen der Struktur und dem Gegenstand hergestellt, dessen Aufnahmeelement - zumeist ein Rastelement - in den strukturfesten Haltebügel eingreift.

Bei der Anwendung des Isofix-Befestigungssystem zur Befestigung eines Kindersitzes ist der Haltebügel beispielsweise strukturseitig an der Karosserie oder der Fahrzeugsitzstruktur befestigt und das Rastelement ist an der Struktur des Kindersitzes angeordnet.

Aus den Druckschriften DE 10 2004 048 358 A1 und DE 100 44 621 C1 sind verschiedene Isofix-Anordnungen bekannt.

Die Druckschrift DE 10 2009 036 726 A1 beschreibt eine Blende an einer DIN-Norm 13216 konformen Isofix-Anbindung mit einer Klappe, die in der Gebrauchsstellung, bei dem die Isofix-Anbindung verriegelt ist, verdrängt wird.

Die Druckschrift DE 102 06 7801 A1 beschreibt einen Fahrzeugsitz in einem Kraftfahrzeug. Der Fahrzeugsitz weist eine Rückenlehne und ein Sitzkissen auf. Zwischen Rückenlehne und Sitzkissen ist ein Schlitz ausgebildet, an dem Rückenlehne und Sitzkissen aneinandergrenzen. Im Bereich dieses Schlitzes ist eine erfindungsgemäße Befestigungsvorrichtung am Fahrzeugsitz angebracht. Diese Befestigungsvorrichtung weist zwei Befestigungselemente auf, die in Längsrichtung des Schlitzes voneinander beabstandet sind. Diese Befestigungselemente sind jeweils als U-förmiger Haltebügel ausgebildet und sind von einer Gebrauchsstellung in eine Nichtgebrauchsstellung oder Parkstellung verstellbar. In der Gebrauchsstellung ragen die beiden Befestigungselemente im Schlitz zwischen Rückenlehne und Sitzkissen hindurch und stehen dabei in einen Sitzbereich des Fahrzeugsitzes vor. In ihrer Gebrauchsstellung sind die beiden Befestigungselemente somit gut zugänglich, um beispielsweise einen hier nicht gezeigten Kindersitz an den Befestigungselementen zu verankern.

Diese Lösung hat den Vorteil, dass die Haltebügel in der Nichtgebrauchsstellung nicht zu sehen sind. Es ist jedoch zukünftig vorgeschrieben, dass die Isofix-Haltebügel auch in Nichtgebrauchsstellung sichtbar sein sollen, damit zur Verbesserung der Sicherheit eine Signalisierung über das Vorhandensein und die Positionierung der Isofix-Haltebügel innerhalb eines Fahrzeugsitzes gewährleistet ist.

In der US 2008/0111411 A1 wird ein Verankerungssystem beschrieben, um einen Kindersitz an einem Fahrzeugsitz zu befestigen. Das System weist einen Haltebügel und zwei ineinander verschiebliche Umhüllungen auf, die mit dem Haltebügel in Eingriff sind.

Zur Verbesserung der Praktikabilität wird zudem gefordert, dass die Anbringung von Gegenständen, insbesondere Kindersitzen an den Isofix-Haltebügeln ohne Umbaumaßnahmen der Isofix-Haltebügel von der Nichtgebrauchsstellung in die Gebrauchsstellung möglich sein soll, wie es beispielsweise bei der Lösung in der Druckschrift DE 102 06 7801 A1 notwendig ist.

Die Erfindung hat somit die Aufgabe eine Einrichtung anzugeben, die stets eine Signalisierung über die Position mindestens eines strukturfesten Halteelementes (Isofix-Haltebügel) eines Befestigungssystems, insbesondere eines Isofix-Befestigungssystems gewährleistet, wobei das mindestens eine Halteelement der Befestigungsvorrichtung zudem für den Benutzer in komfortabler Art und Weise an dem Fahrzeugsitz angeordnet sein soll.

Ausgangspunkt der Erfindung ist eine Aufnahmeeinrichtung, die insbesondere an einem Fahrzeugsitz angeordnet ist. Die Aufnahmeeinrichtung ist im Bereich eines Halteelementes eines Befestigungssystems angeordnet. Das Befestigungssystem umfasst ein an dem Halteelement, insbesondere einem Isofix-Haltebügeln festlegbares Aufnahmeelement eines zu befestigenden Ausstattungsteiles. Das Ausstattungsteil ist insbesondere ein Kindersitz, der das Aufnahmeelement aufweist. Das Halteelement des Befestigungssystems ist mit einem Blendenelement versehen, welches eine Blendenöffnung aufweist, durch die das Aufnahmeelement geführt wird, wenn eine Befestigung des Aufnahmeelementes, somit des Kindersitzes, an dem Halteelement stattfindet, wobei das Halteelement in geeigneter Weise strukturfest mit dem Fahrzeugsitz oder der Karosserie eines Fahrzeuges verbunden ist. Die Aufnahmeeinrichtung umfasst eben dem Blendenelement ein Halteteil, welches an dem Halteelement reversibel fixiert ist. Erfindungsgemäß ist vorgesehen, dass das Blendenelement einen von der Blendenöffnung ausgehenden Hüllkörper mit zu dem Halteelement offenen Blendenelement-Kulissen innerhalb des Hüllkörpers aufweist, wobei der Hüllkörper des Blendenelementes einen Korpus des Halteteiles zumindest teilweise umschließt und die Blendenelement-Kulissen des Blendenelementes auf ihrer Offenseite in das Halteelement eingreifen.

Dadurch ist in vorteilhafter Weise das Blendenelement gegenüber dem Halteelement über die Blendenelement-Kulissen und die Umschließung des Hüllkörpers an dem Halteteil gelagert und teleskopartig beweglich geführt. Ein wesentlicher Vorteil der Aufnahmeeinrichtung liegt in dem einfachen Aufbau, der im nachfolgenden noch weiter erläutert wird. Ein weiterer Vorteil liegt in der einfachen Funktionalität der Aufnahmeeinrichtung, wie ebenfalls im nachfolgenden noch näher erläutert wird. Die Aufnahmeeinrichtung ist zudem in vorteilhafter Weise leicht montierbar, wobei bei der Herstellung ein geringer Materialeinsatz notwendig ist. Die Anordnung des Blendenelementes, welches im verbauten Zustand stets sichtbar bleibt, wie nachfolgend ebenfalls noch erläutert wird, erlaubt die Anbringung von Kennzeichnungen, insbesondere von Piktogrammen. Durch solche Kennzeichnungen besteht in vorteilhafter Weise die Möglichkeit, die Position der Aufnahmeeinrichtung zu signalisieren wodurch in vorteilhafter Weise neben der Komfortverbesserung geforderte Sicherheitsaspekte erfüllt werden.

In bevorzugter Ausgestaltung der Erfindung ist vorgesehen, dass das Halteteil in seinem Korpus offene Halteteil-Kulissen aufweist, wodurch das Halteteil über die Offenseite der Halteteil-Kulissen auf das Halteelement schiebbar ist, wodurch das Halteteil reversibel über endseitig der Halteteil-Kulissen angeordnete Rastöffnungen und am Halteteil angeordnete Positioniernasen an dem Halteelement positionsgetreu fixiert ist.

Durch diese Ausbildung ist das Halteteil einfach montierbar und weist insgesamt einen einfachen Aufbau auf, wobei der Korpus des Halteteiles von der Formgebung her mit dem Hüllkörper des Blendenelementes abgestimmt ist, wie in der Beschreibung noch näher erläutert wird.

In bevorzugter Ausgestaltung der Erfindung, weist das Blendenelement einen Blendenkragen auf, der in dem Hüllkörper des Blendenelementes an einer der Offenseite der Blendenelement-Kulissen gegenüberliegenden Vorderseite des Hüllkörpers des Blendenelementes angeordnet ist. Der Blendenkragen ermöglicht in vorteilhafter Weise die Anordnung von Kennzeichnungen, da die Fläche des Blendenkragens innerhalb der Fläche des Fahrzeugsitzes stets sichtbar ist. Zudem kommt dem Blendenkragen hinsichtlich der Funktionalität eine besondere Bedeutung zu, die in der Beschreibung noch näher erläutert wird.

Damit das Aufnahmeelement, beispielsweise das Aufnahmeelement eines Kindersitzes, positionsgenau zu dem Halteelement geführt wird, wenn das Aufnahmeelement des Kindersitzes in das Blendenelement eingeführt und an dem Halteelement befestigt wird, ist erfindungsgemäß vorgesehen, dass der Hüllkörper des Blendenelementes einen geraden Schacht bildet oder in der Art eines Trichters ausgebildet ist, so dass das Aufnahmeelement problemlos an dem Halteelement verrastet beziehungsweise einrastet.

Die Funktionalität der Aufnahmeeinrichtung steht im Zusammenhang mit dem Gegenstand in dem die Aufnahmeeinrichtung verbaut ist, wobei nachfolgend ein Fahrzeugsitz zur Erläuterung der Funktionalität dient. Die Teleskopierbarkeit der Aufnahmeeinrichtung ergibt sich durch die zuvor genannten technischen Merkmale, wobei die Bewegung des Blendenelementes von einer Position in die andere folgendermaßen stattfindet. Das Blendenelement befindet sich in einer ersten Position in einer Bereitstellungs- und Gebrauchssituation. In dieser Bereitstellungs- und Gebrauchssituation ist das Blendenelement unbelastet, dass heißt auf das Blendenelement wirkt keine äußere Kraft.

In dieser Bereitstellungs- und Gebrauchssituation greift das Halteelement in einer bestimmten vorgebbaren ersten Position in die Blendenelement-Kulissen.

Die Belastung des Blendenelementes erfolgt durch das aufsitzen einer Person auf dem Fahrzeugsitz, der so genannten Aufsitzposition. Eine äußere Kraft, die durch den Aufsitzenden bewirkt wird, führt zu dem belasteten Blendenelement, welches eine zweite Position einnimmt, in der das Halteelement gemäß der zweiten Position in die Blendenelement-Kulissen des Blendenelementes eingreift.

In bevorzugter Ausgestaltung der Erfindung ist das Blendenelement gemeinsam mit dem Halteteil in einer Aussparung eines Schaumes angeordnet, der auf der Struktur des Fahrzeugsitzes, dass heißt auf der Struktur des Rückenlehnenteiles und des Sitzteiles

angeordnet ist. Die Anordnung des Blendenelementes mit dem Blendenkragen erfolgt derart, dass der Blendenkragen des Blendenelementes mit seiner Rückseite flächig auf der als Anlagefläche ausgebildeten Oberfläche des Schaumes anliegt, während die Vorderseite des Blendenkragens des Blendenelementes zu einer auf dem Fahrzeugsitz aufsitzenden Person gerichtet ist.

Es versteht sich, dass zwischen dem Schaum und der Rückseite des Blendenelementes ein Bezug des Rückenlehnenteiles bzw. des Sitzteiles angeordnet ist, der jedoch hinsichtlich der Funktionalität dieser Erfindung keine Rolle spielt.

Durch diese Anordnung ergibt sich in vorteilhafter Weise die Funktion der Aufnahmeeinrichtung, nämlich, dass das unbelastete Blendenelement durch den auf der Struktur, insbesondere der Struktur des Rückenlehnenteiles des Fahrzeugsitzes angeordneten Schaum in der ersten Position gehalten wird, da das Blendenelement über die auf der Rückseite des Blendenkragens des Blendenelementes wirkende Schaumpressung in der ersten Position gehalten wird.

Das belastete Blendenelement wird hingegen unter Überwindung der auf der Rückseite des Blendenkragens des Blendenelementes wirkenden Schaumpressung in die zweite Position gebracht, sobald eine Person auf dem Fahrzeugsitz aufsitzt, die mit ihrem Körper, insbesondere mit der Rückseite ihres Körpers unter Überwindung der Schaumpressung auf die Vorderseite des Blendenkragens des Blendenelementes einwirkt.

Es wird in vorteilhafter Weise deutlich, dass die Teleskopierbarkeit nicht durch zusätzliche mechanische oder notwendige Antriebsmittel hervorgerufen wird, sondern dass die äußere Kraft durch den Aufsitzenden aufgebracht wird, wodurch die einfache Ausgestaltung der Aufnahmeeinrichtung, die im Wesentlichen aus nur zwei leicht montierbaren Teilen besteht, ermöglicht wird.

Weitere bevorzugte Ausgestaltungen der Erfindung ergeben sich aus den übrigen, in den Unteransprüchen genannten Merkmalen.

Die Erfindung wird nachfolgend erläutert. Für die Zwecke der vorliegenden Beschreibung soll mit "+x" ("plus x") die übliche Fahrtrichtung eines Fahrzeugs bezeichnet werden, mit "-x" ("minus x") die Richtung entgegen seiner üblichen Fahrtrichtung, mit "y" wird die Richtung in der Horizontalen quer zur x-Richtung bezeichnet, und mit "z" wird die Richtung in der Vertikalen quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

Es zeigen:
- Figur 1: eine perspektivische Darstellung eines Fahrzeugsitzes mit zwei nebeneinander angeordneten Aufnahmeeinrichtungen im Einbauzustand;
- Figur 2: eine vergrößerte Darstellung einer der Aufnahmeeinrichtungen nach Figur 1;
- Figur 3: eine vergrößerte Darstellung der Aufnahmeeinrichtung und eines Halteelementes eine Befestigungseinrichtung zur Verdeutlichung der Teleskopierbarkeit eines Blendenelementes gegenüber einem Halteteil;
- Figur 4: eine vergrößerte perspektivische Einzeldarstellung des Blendenelementes der Aufnahmeeinrichtung;
- Figur 5: eine vergrößerte perspektivische Einzeldarstellung des Halteteiles der Aufnahmeeinrichtung;

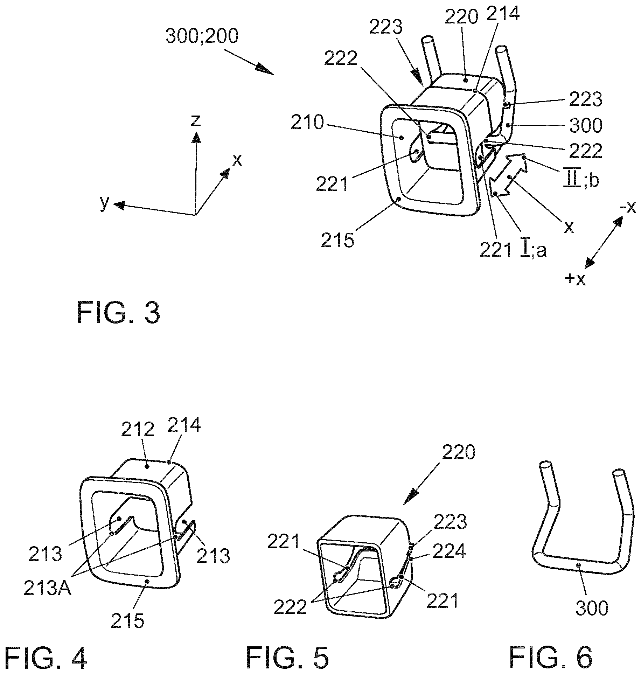

- Figur 4: eine vergrößerte perspektivische Einzeldarstellung des Halteelementes der Befestigungseinrichtung.

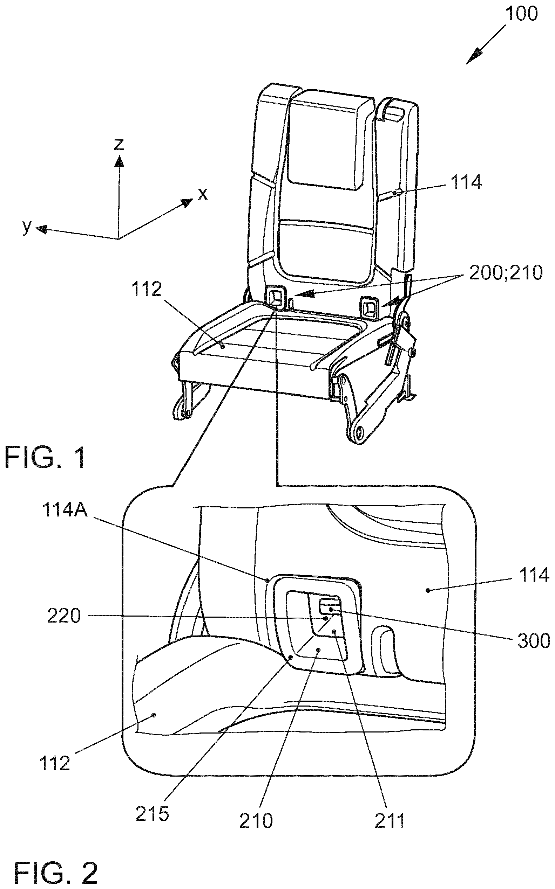

Figur 1 zeigt einen Fahrzeugsitz 100, der ein Sitzteil 112 und ein Rückenlehnenteil 114 umfasst. Bei der perspektivischen Darstellung ist auf der Struktur des Sitzteiles 112 und des Rückenlehnenteiles 114 der üblicherweise auf der Struktur angeordnete Schaum dargestellt.

Im Ausführungsbeispiel ist eine Aufnahmeeinrichtung 200 in einer Aussparung 114A des Schaumes des Rückenlehnenteiles 114 angeordnet. Im Ausführungsbeispiel ist als Aussparung 114A ein rechteckiger Querschnitt vorgesehen. Die Aussparung 114A bildet somit einen Schacht in dem Schaum, durch die der Zugang zu einem Halteelement 300 einer Befestigungseinrichtung gewährleistet ist.

Das Halteelement 300 ist beispielsweise ein Isofix-Haltebügel. Es wird darauf hingewiesen, dass das Halteelement 300, welches strukturfest, das heißt karosseriefest oder mit der Struktur des Rückenlehnenteiles 114 oder des Sitzteiles 112 verbunden ist, starr oder flexibel an der Struktur angeordnet sein kann. Üblicherweise erfolgt die Befestigung eines Kindersitzes an zwei der Halteelemente 300 gemäß der Anordnung nach Figur 3. Die Halteelemente 300 liegen in einem vorgebbaren Abstand in y-Richtung gesehen nebeneinander. Bei den meisten Fahrzeugen handelt es sich jedoch bei den Halteelementen 300 um Isofix-Haltebügel.

Das Gegenstück der Befestigungseinrichtung, nämlich ein Aufnahmeelement bzw. zwei Aufnahmeelemente welches/welche beispielsweise an einem nicht näher dargestellten Kindersitz angeordnet ist/sind, komplettiert die Befestigungseinrichtung. Das Aufnahmeelement/ die Aufnahmeelemente ist/sind in den Figuren nicht dargestellt.

Die Figur 1 verdeutlicht, dass die erfindungsgemäße Aufnahmeeinrichtung 200 ein Blendenelement 210 umfasst.

In der vergrößerten Darstellung der Figur 2 einer der beiden Aufnahmeeinrichtungen 100 wird deutlich, dass die Aufnahmeeinrichtung 200 neben dem Blendenelement 210 ein Halteteil 220 umfasst, welches in Figur 2 durch das Blendenelement 210 zumindest teilweise verdeckt ist.

Die im Ausführungsbeispiel im Wesentlichen einen rechteckigen Querschnitt aufweisende Aussparung 114 A beherbergt im Einbauzustand das Halteteil 220 und das Blendenelement 210, wobei in Figur 2 bereits sichtbar wird, dass ein Hüllkörper 212 ebenfalls einen rechteckigen Querschnitt aufweist, wobei der Hüllkörper im Ausführungsbeispiel einen geraden Schacht aufweist, der die Blendenöffnung 211 des Blendenelementes 210 bildet.

Die Figur 2 verdeutlicht ferner, dass das Blendenelement 210 in dem Rückenlehnenteil 114 oberhalb des Sitzteiles 112 angeordnet ist. Die Aufnahmeeinrichtung 200 sitzt somit kurz oberhalb des Übergangsbereiches des Sitzteiles 112 zu dem Rückenlehnenteil 114 im Schaum des Rückenlehnenteiles.

In Figur 2 befindet sich die Aufnahmeeinrichtung 200 in einer ersten Position a in Bereitstellung- und Gebrauchssituation.

In dieser ersten Position a liegt die Rückseite eines Blendenkragens 215 des Blendenelementes 210 an der Vorderfläche des Schaumes des Rückenlehnenteiles 114 an und überdeckt dabei die Ränder der Aussparung 114 A. Durch diese Anordnung ergibt sich ein sauberer Übergang zwischen dem Schaum beziehungsweise dem auf dem Schaum angeordneten Bezug und der Aussparung 114A.

In der Bereitstellungs- und Gebrauchssituation ist das Blendenelement 210 von außen nicht mit einer Kraft belastet. In dieser Bereitstellungs- und Gebrauchssituation liegt somit die Vorderfläche des Blendenelementes in einer Ebene mit der Fläche des mit dem Schaum und dem Bezug versehenen Rückenlehnenteiles 114.

Diese Situation zeigt Figur 3 in einer vergrößerten Darstellung. Die Aufnahmeeinrichtung 200 umfasst das Halteteil 220 und das Blendenelement 210.

Das Blendenelement 210 befindet sich in Figur 3 in der ersten Position a.

Das Blendenelement 210 ist in -x-Richtung in eine zweite Position b teleskopierbar, wie der Pfeil in Figur 3 verdeutlicht.

Die Verschiebbarkeit des Blendenelementes 210 in -x-Richtung ist reversibel, so dass die Bewegung des Blendenelementes 210 in +x-Richtung stattfinden kann.

An dem Halteelement 300 ist das Halteteil 220 angeordnet.

Das Halteteil 220 weist im Ausführungsbeispiel ebenfalls einen rechteckigen Korpus auf, wobei die Außenkontur des Korpus mit der Innenkontur des Hüllkörpers 212 des Blendenelementes 210 korrespondiert. Der Hüllkörper 212 des Blendenelementes 210 bildet somit eine Umschließung 214, die dafür sorgt, dass der Hüllkörper 212 des Blendenelementes 210 auf dem Korpus des Halteteiles 220 verschieblich gelagert ist. Das Halteteil 220 weist in seinem Korpus offene Halteteil-Kulissen 221 auf.

Im Einbauzustand ist das Halteteil 220 über die Offenseite der Halteteil-Kulissen 221 auf das Halteelement 300 geschoben. Am Ende der Halteteil-Kulissen 221 sind Rastöffnungen 222 ausgeführt, in die das Halteelement 300 einrastet, wodurch das Halteteil 220 positionsgenau an dem Halteelement 300 fixiert ist. Zudem sind am Korpus des Halteteiles 220 Positioniernasen 223 angeordnet, wodurch das Halteteil 220 ebenfalls an dem Halteelement 300 zur Anlage kommt und somit an dem Halteelement 300 stabilisiert angeordnet ist. Wie Figur 3 verdeutlicht sind in y-Richtung gesehen zwei Positioniernasen 223 gegenüberliegend an dem Korpus des Halteteiles 220 angeordnet.

In Figur 3 wird deutlich, dass die Aufnahmeeinrichtung 200 modular aufgebaut ist und zwei wesentliche Bauteile, nämlich das Halteteil 220 und das Blendenelement 210 umfasst.

In Figur 4 ist noch eine vergrößerte perspektivische Einzeldarstellung des Blendenelementes 210 der Aufnahmeeinrichtung dargestellt. Die Blendenelement-Kulissen 213 weisen eine Offenseite auf, während die gegenüberliegende Seite einen Anschlag 213 A bildet. Sichtbar ist ferner die Umschließung 214 des Hüllkörpers 212, der den Korpus des Halteteiles 220 umschließt.

In Figur 5 ist das Halteteil 220 in einer vergrößerten perspektivischen Einzeldarstellung zu sehen. Die Halteteil-Kulissen 221 und die Rastöffnungen 222 sind sichtbar. Der untere Teil des Korpus des Halteteiles 220 ist in -x-Richtung ausgehend von der herkömmlichen Einbauweise eines Fahrzeugsitzes 100 in einer Art Blendteil 224 des Halteteiles 220 nach oben gebogen, wodurch ein Betrachter bei einem schräg von oben auf die Aufnahmeeinrichtung 200 gerichteten Blick nicht in den durch den Korpus des Halteteiles 220 und den Hüllkörper 212 des Blendenelementes 210 gebildeten offenen Schacht hindurch sehen kann. Es wird deutlich, dass dadurch die Halteteil-Kulissen 221 halbkreisförmig ausgebildet sind.

Beim Einbau der Aufnahmeeinrichtung wird zuerst das Halteteil 220 über die Halteteil-Kulissen 221 an dem Halteelement 300, welches in Figur 6 gezeigt ist, in den Rastöffnungen 222 verrastet, welche gleichzeitig die Funktion eines Anschlages übernehmen.

Das Halteelement 300, insbesondere der Isofix-Haltebügeln in seiner u-förmigen Ausgestaltung, ist in Figur 6 in einer Einzeldarstellung gezeigt.

Nach dem Einbau des Halteteiles 220 erfolgt der Einbau des Blendenelementes 210, wobei im Ausführungsbeispiel der in y-Richtung verlaufende Teil des Isofix-Haltebügels in die in y-Richtung gegenüberliegenden Blendenelement-Kulissen 213 eingreifen. Die gegenüber der Offenseite der Blendenelement-Kulissen 213 angeordneten Anschläge 213A werden durch die Schließseite der Blendenelement-Kulissen 213A gebildet.

Beim Einbau des Blendenelementes 210 ergibt sich die erste Position a dadurch, dass die Rückseite des Blendenkragens 215 an der Vorderfläche des Rückenlehnenteiles 114 an dem Schaum bzw. dem mit einem Bezug versehenen Schaum des Rückenlehnenteiles 114 zur Anlage kommt.

Wie erläutert, greift das Halteelement 300 gemäß Figur 3 in der Bereitstellungs- und Gebrauchssituation I der Aufnahmeeinrichtung 200 in der ersten Position a in die Blendenelement-Kulissen 213 des unbelasteten Blendenelementes 210 und in der Aufsitzposition II, bei der eine nicht gezeigte Person auf dem Fahrzeugsitz 100 aufsitzt, in einer in der zweiten Position b in die Blendenelement-Kulissen 213 des durch die Person belasteten Blendenelementes 210 ein.

Das unbelastete Blendenelement wird durch den auf der Struktur, insbesondere der Struktur des Rückenlehnenteiles 14 des Fahrzeugsitzes 100 angeordneten Schaum, in der ersten Position a gehalten, da das Blendenelement 210 über die auf die Rückseite des Blendenkragens 215 des Blendenelementes 210 wirkende Schaumpressung in die erste Position a gedrückt wird.

Das belastete Blendenelement wird unter Überwindung der auf der Rückseite des Blendenkragens 215 des Blendenelementes 210 wirkenden Schaumpressung in die zweite Position b gebracht, sobald eine Person auf dem Fahrzeugsitz 100 aufsitzt, die mit ihrem Körper unter Überwindung der Schaumpressung mit einer äußeren Kraft auf die Vorderseite des Blendenkragens 215 des Blendenelementes 210 einwirkt.

Das Blendenelement 210 bewegt sich zusammenfassend nach Bedarf beim Aufsitzen einer Person (Gebrauchssitutation des Fahrzeugsitzes 100) mit und ist somit nicht starr beziehungsweise positionsfest am Rückenlehnenteil 114 und/oder Sitzteil 112 angeordnet. In Gebrauchsituation des Fahrzeugsitzes 100 stellt das Blendenelement 210 dadurch für den Aufsitzenden komforterhöhend nie ein störendes Element dar.

### Bezugszeichenliste

- 100: Fahrzeugsitz
- 112: Sitzteil
- 114: Rückenlehnenteil
- 114A: Aussparung
- 200: Aufnahmeeinrichtung
- 210: Blendenelement
- 211: Blendenöffnung
- 212: Hüllkörper
- 213: Blendenelement-Kulissen
- 213A: Anschlag
- 214: Umschließung
- 215: Blendenkragen
- 220: Halteteil
- 221: Halteteil-Kulissen
- 222: Rastöffnungen
- 223: Positioniernasen
- 224: Blendteil
- 300: Halteelement
- I: Bereitstellungs- und Gebrauchssituation
- II: Aufsitzposition
- a: erste Position
- b: zweite Position

## Patentansprüche

1. Aufnahmeeinrichtung (200), insbesondere an einem Fahrzeugsitz (100) für ein Haltelement (300) eines Befestigungssystems, welches ein an dem Haltelement (300), insbesondere einem Isofix-Haltebügel, festlegbares Aufnahmeelement eines zu befestigenden Ausstattungsteiles, insbesondere eines Kindersitzes umfasst, wobei das Halteelement (300) mit einem eine Blendenöffnung (211) aufweisenden Blendenelement (210) versehen ist, wobei die Aufnahmeeinrichtung (200) neben dem Blendenelement (210) ein Halteteil (220) umfasst, welches an dem Haltelement (300) reversibel fixiert ist, wobei das Blendenelement (210) einen von der Blendenöffnung (211) ausgehenden Hüllkörper (212) mit zu dem Halteelement (300) offenen Blendenelement-Kulissen (213) innerhalb des Hüllkörpers (212) aufweist, **dadurch gekennzeichnet, dass** der Hüllkörper (212) des Blendenelementes (210) einen Korpus des Halteteiles (220) zumindest teilweise umschließt und die Blendenelement-Kulissen (213) des Blendenelementes (210) auf ihrer Offenseite in das Halteelement (300) eingreifen, wodurch das Blendenelement (210) gegenüber dem Halteteil (220) über die Blendenelement-Kulissen (213) und die Umschließung (214) des Hüllkörpers (212) an dem Halteteil (220) gelagert und teleskopartig beweglich geführt ist.

2. Aufnahmeeinrichtung (200) nach Anspruch 1, **dadurch gekennzeichnet, dass** das Halteteil (220) in seinem Korpus offene Halteteil-Kulissen (221) aufweist, wodurch das Halteteil (220) über die Offenseite der Halteteil-Kulissen (221) auf das Halteelement (300) schiebbar ist, wodurch das Halteteil (220) reversibel über endseitig der Halteteil-Kulissen (221) angeordnete Rastöffnungen (222) und am Halteteil (220) angeordnete Positioniernasen (223) an dem Halteelement (300) positionsgetreu fixiert ist.

3. Aufnahmeeinrichtung (200) nach Anspruch 1, **dadurch gekennzeichnet, dass** das Blendenelement (210) einen Blendenkragen (215) aufweist, der in dem Hüllkörper (212) des Blendenelementes (210) an einer der Offenseite der Blendenelement-Kulissen (213) gegenüberliegenden Vorderseite des Hüllkörpers (212) des Blendenelementes (210) angeordnet ist.

4. Aufnahmeeinrichtung (200) nach Anspruch 1, **dadurch gekennzeichnet, dass** der Blendenkragen (215) ein Piktogramm umfasst.

5. Aufnahmeeinrichtung (200) nach Anspruch 1, **dadurch gekennzeichnet, dass** der Hüllkörper (212) des Blendenelementes (210) die Form eines geraden Schachtes oder eines Trichters aufweist.

6. Fahrzeugsitz mit einer Aufnahmeeinrichtung (200) für das Haltelement (300) eines Befestigungssystems, welches ein an dem Haltelement (300), insbesondere einem Isofix-Haltebügel, festlegbares Aufnahmeelement eines zu befestigenden Ausstattungsteiles, insbesondere eines Kindersitzes umfasst, wobei das Halteelement (300) mit einem eine Blendenöffnung (211) aufweisenden Blendenelement (210) versehen ist, wobei die Aufnahmeeinrichtung (200) neben dem Blendenelement (210) ein Halteteil (220) umfasst, welches an dem Haltelement (300) reversibel fixiert ist, wobei das Blendenelement (210) einen von der Blendenöffnung (211) ausgehenden Hüllkörper (212) mit zu dem Halteelement (300) offenen Blendenelement-Kulissen (213) innerhalb des Hüllkörpers (212) aufweist, **dadurch gekennzeichnet, dass** der Hüllkörper (212) des Blendenelementes (210) einen Korpus des Halteteiles (220) zumindest teilweise umschließt und die Blendenelement-Kulissen (213) des Blendenelementes (210) auf ihrer Offenseite in das Halteelement (300) eingreifen, wodurch das Blendenelement (210) gegenüber dem Halteteil (220) über die Blendenelement-Kulissen (213) und die Umschließung (214) des Hüllkörpers (212) an dem Halteteil (220) gelagert und teleskopartig beweglich geführt ist, wobei das Halteelement (300) in einer Bereitstellungs- und Gebrauchssituation (I) der Aufnahmeeinrichtung (200) in einer ersten Position (a) in die Blendenelement-Kulissen (213) des unbelasteten Blendenelementes (210) und in einer Aufsitzposition (II), bei der eine Person auf dem Fahrzeugsitz (100) aufsitzt, in einer zweiten Position (b) in die Blendenelement-Kulissen (213) des durch die Person belasteten Blendenelementes (210) eingreift.

7. Fahrzeugsitz (100) nach Anspruch 6, **dadurch gekennzeichnet, dass** die Aufnahmeinrichtung (200) mindestens einen der Ansprüche 2 bis 5 aufweist.

8. Fahrzeugsitz (100) nach Anspruch 6, **dadurch gekennzeichnet, dass** das Blendenelement (210) gemeinsam mit dem Halteteil (220) in einer Aussparung (14A) des Schaumes angeordnet ist, wobei der Blendenkragen (215) des Blendenelementes (210) mit seiner Rückseite flächig auf der als Anlagefläche ausgebildeten Oberfläche des Schaumes anliegt, während die Vorderseite des Blendenkragens (215) des Blendenelementes (210) zu einer auf dem Fahrzeugsitz (100) aufsitzenden Person gerichtet ist.

9. Fahrzeugsitz (100) nach Anspruch 6, **dadurch gekennzeichnet, dass** das unbelastete Blendenelement (210) durch den auf der Struktur, insbesondere der Struktur des Rückenlehnenteiles (14) des Fahrzeugsitzes (100) angeordneten Schaum in der ersten Position (a) gehalten wird, da das Blendenelement (210) über die auf die Rückseite des Blendenkragens (215) des Blendenelementes (210) wirkende Schaumpressung in der ersten Position (a) gehalten wird.

10. Fahrzeugsitz (100) nach Anspruch 6, **dadurch gekennzeichnet, dass** das belastete Blendenelement (210) unter Überwindung der auf der Rückseite des Blendenkragens (215) des Blendenelementes (210) wirkenden Schaumpressung in die zweite Position (b) gebracht wird, sobald eine Person auf dem Fahrzeugsitz (100) aufsitzt, die mit ihrem Körper unter Überwindung der Schaumpressung auf die Vorderseite des Blendenkragens (215) des Blendenelementes (210) einwirkt.

## Claims

1. Receiving device (200), in particular on a vehicle seat (100) for a holding element (300) of a fastening system which comprises a receiving element, which can be fixed to the holding element (300), in particular to an isofix holding bracket, of an equipment part to be fastened, in particular a child seat, wherein the holding element (300) is provided with a cover element (210) having a cover opening (211), wherein the receiving device (200), in addition to the cover element (210), comprises a holding part (220) which is fixed reversibly on the holding element (300), wherein the cover element (210) has an enveloping body (212) which starts from the cover opening (211) and has cover-element guide slots (213), which are open towards the holding element (300), within the enveloping body (212), **characterized in that** the enveloping body (212) of the cover element (210) at least partially surrounds a body of the holding part (220), and the cover-element guide slots (213) of the cover element (210) engage on their open side in the holding element (300), as a result of which the cover element (210) is mounted and is guided in a telescopically movable manner in relation to the holding part (220) via the cover-element guide slots (213) and the enclosure (214) of the enveloping body (212) on the holding part (220).

2. Receiving device (200) according to Claim 1, **characterized in that** the holding part (220) has open holding-part guide slots (221) in its body, as a result of which the holding part (220) can be pushed onto the holding element (300) via the open side of the holding-part guide slots (221), as a result of which the holding part (220) is fixed accurately in position on the holding element (300) in a reversible manner via latching openings (222) arranged on the end sides of the holding-part guide slots (221) and positioning lugs (223) arranged on the holding part (220).

3. Receiving device (200) according to Claim 1, **characterized in that** the cover element (210) has a cover collar (215) which is arranged in the enveloping body (212) of the cover element (210) on a front side of the enveloping body (212) of the cover element (210), said front side being opposite the open side of the cover-element guide slots (213).

4. Receiving device (200) according to Claim 1, **characterized in that** the cover collar (215) comprises a pictogram.

5. Receiving device (200) according to Claim 1, **characterized in that** the enveloping body (212) of the cover element (210) has the form of a rectilinear shaft or a funnel.

6. Vehicle seat with a receiving device (200) for the holding element (300) of a fastening system which comprises a receiving element, which can be fixed to the holding element (300), in particular to an isofix holding bracket, of an equipment part to be fastened, in particular a child seat, wherein the holding element (300) is provided with a cover element (210) having a cover opening (211), wherein the receiving device (200), in addition to the cover element (210), comprises a holding part (220) which is fixed reversibly on the holding element (300), wherein the cover element (210) has an enveloping body (212) which starts from the cover opening (211) and has cover-element guide slots (213), which are open towards the holding element (300), within the enveloping body (212), **characterized in that** the enveloping body (212) of the cover element (210) at least partially surrounds a body of the holding part (220), and the cover-element guide slots (213) of the cover element (210) engage on their open side in the holding element (300), as a result of which the cover element (210) is mounted and is guided in a telescopically movable manner in relation to the holding part (220) via the cover-element guide slots (213) and the enclosure (214) of the enveloping body (212) on the holding part (220), wherein, in a standby and use situation (I) of the receiving device (200), the holding element (300) in a first position (a) engages in the cover-element guide slots (213) of the unloaded cover element (210), and in a sitting position (II) in which a person sits on the vehicle seat (100), in a second position (b) engages in the cover-element guide slots (213) of the cover element (210) loaded by the person.

7. Vehicle seat (100) according to Claim 6, **characterized in that** the receiving device (200) has at least one of Claims 2 to 5.

8. Vehicle seat (100) according to Claim 6, **characterized in that** the cover element (210) is arranged together with the holding part (220) in a recess (14A) in the foam, wherein the cover collar (215) of the cover element (210) lies with its rear side flat on the foam surface designed as a contact surface, while the front side of the cover collar (215) of the cover element (210) is directed towards a person sitting on the vehicle seat (100).

9. Vehicle seat (100) according to Claim 6, **characterized in that** the unloaded cover element (210) is held in the first position (a) by the foam arranged on the structure, in particular the structure of the backrest part (14) of the vehicle seat (100), since the cover element (210) is held in the first position (a) via the pressure of the foam acting on the rear side of the cover collar (215) of the cover element (210).

10. Vehicle seat (100) according to Claim 6, **characterized in that** the loaded cover element (210) is brought into the second position (b), by overcoming the pressure of the foam acting on the rear side of the cover collar (215) of the cover element (210), as soon as a person sits on the vehicle seat (100), the body of the person acting on the front side of the cover collar (215) of the cover element (210) by overcoming the pressure of the foam.

## Revendications

1. Dispositif de logement (200), en particulier sur un siège de véhicule (100) pour un élément de maintien (300) d'un système de fixation, qui comprend un élément de réception d'une pièce d'équipement à fixer, en particulier d'un siège d'enfant, pouvant être attaché à l'élément de maintien (300), en particulier à un étrier de maintien Isofix, dans lequel l'élément de maintien (300) est muni d'un élément de cache (210) présentant une ouverture de cache (211), dans lequel le dispositif de logement (200) comprend en plus de l'élément de cache (210) une pièce de maintien (220) qui est fixée de façon réversible à l'élément de maintien (300), dans lequel l'élément de cache (210) présente un corps de gaine (212) partant de l'ouverture de cache (211) avec des glissières d'élément de cache (213) ouvertes vers l'élément de maintien (300) à l'intérieur du corps de gaine (212), **caractérisé en ce que** le corps de gaine (212) de l'élément de cache (210) entoure au moins en partie un corps de la pièce de maintien (220) et les glissières d'élément de cache (213) de l'élément de cache (210) pénètrent sur leur côté ouvert dans l'élément de maintien (300), l'élément de cache (210) étant ainsi supporté et guidé en mouvement télescopique par rapport à la pièce de maintien (220) sur la pièce de maintien (220) au moyen des glissières d'élément de cache (213) et de l'enveloppe (214) du corps de gaine (212).

2. Dispositif de logement (200) selon la revendication 1, **caractérisé en ce que** la pièce de maintien (220) présente dans son corps des glissières de pièce de maintien ouvertes (221), par lesquelles la pièce de maintien (220) peut coulisser sur l'élément de maintien (300) par l'intermédiaire du côté ouvert des glissières de pièce de maintien (221), par lesquelles la pièce de maintien (220) est fixé de façon réversible en position conforme sur l'élément de maintien (300) au moyen d'ouvertures d'encliquetage (222) disposées vers l'extrémité des glissières de pièce de maintien (221) et d'ergots de positionnement (223) disposés sur la pièce de maintien (220).

3. Dispositif de logement (200) selon la revendication 1, **caractérisé en ce que** l'élément de cache (210) présente un rebord de cache (215), qui est disposé dans le corps de gaine (212) de l'élément de cache (210) sur un côté avant du corps de gaine (212) de l'élément de cache (210) opposé au côté ouvert des glissières d'élément de cache (213).

4. Dispositif de logement (200) selon la revendication 1, **caractérisé en ce que** le rebord de cache (215) comprend un pictogramme.

5. Dispositif de logement (200) selon la revendication 1, **caractérisé en ce que** le corps de gaine (212) de l'élément de cache (210) présente la forme d'un puits droit ou d'un entonnoir.

6. Siège de véhicule avec un dispositif de logement (200) pour l'élément de maintien (300) d'un système de fixation, qui comprend un élément de réception d'une pièce d'équipement à fixer, en particulier d'un siège d'enfant, pouvant être attaché à l'élément de maintien (300), en particulier à un étrier de maintien Isofix, dans lequel l'élément de maintien (300) est muni d'un élément de cache (210) présentant une ouverture de cache (211), dans lequel le dispositif de logement (200) comprend en plus de l'élément de cache (210) une pièce de maintien (220) qui est fixée de façon réversible à l'élément de maintien (300), dans lequel l'élément de cache (210) présente un corps de gaine (212) partant de l'ouverture de cache (211) avec des glissières d'élément de cache (213) ouvertes vers l'élément de maintien (300) à l'intérieur du corps de gaine (212), **caractérisé en ce que** le corps de gaine (212) de l'élément de cache (210) entoure au moins en partie un corps de la pièce de maintien (220) et les glissières d'élément de cache (213) de l'élément de cache (210) pénètrent sur leur côté ouvert dans l'élément de maintien (300), l'élément de cache (210) étant ainsi supporté et guidé en mouvement télescopique par rapport à la pièce de maintien (220) sur la pièce de maintien (220) au moyen des glissières d'élément de cache (213) et de l'enveloppe (214) du corps de gaine (212), dans lequel l'élément de maintien (300) dans une situation de préparation et d'utilisation (I) du dispositif de logement (200) s'engage dans une première position (a) dans les glissières d'élément de cache (213) de l'élément de cache non chargé (210) et dans une position d'occupation (II), dans laquelle une personne est assise sur le siège de véhicule (100), s'engage dans une deuxième position (b) dans les glissières d'élément de cache (213) de l'élément de cache (210) chargé par la personne.

7. Siège de véhicule (100) selon la revendication 6, **caractérisé en ce que** le dispositif de logement (200) présente au moins une des revendications 2 à 5.

8. Siège de véhicule (100) selon la revendication 6, **caractérisé en ce que** l'élément de cache (210) est disposé ensemble avec la pièce de maintien (220) dans un évidement (14A) de la mousse, dans lequel le rebord de cache (215) de l'élément de cache (210) s'applique à plat par sa face arrière sur la surface de la mousse formant une face d'appui, tandis que le côté avant du rebord de cache (215) de l'élément de cache (210) est dirigé vers une personne assise sur le siège de véhicule (100).

9. Siège de véhicule (100) selon la revendication 6, **caractérisé en ce que** l'élément de cache (210) non chargé est maintenu dans la première position (a) par la mousse disposée sur la structure, en particulier sur la structure de la partie de dossier (14) du siège de véhicule (100), parce que l'élément de cache (210) est maintenu dans la première position (a) par la pression de la mousse agissant sur le côté arrière du rebord de cache (215) de l'élément de cache (210).

10. Siège de véhicule (100) selon la revendication 6, **caractérisé en ce que** l'élément de cache (210) chargé est amené dans la deuxième position (b) en surmontant la pression de la mousse agissant sur le côté arrière du rebord de cache (215) de l'élément de cache (210), dès qu'une personne s'assied sur le siège de véhicule (100), qui agit avec son corps sur le côté avant du rebord de cache (215) de l'élément de cache (210) pour surmonter la pression de la mousse.
